# FASCICULE DE BREVET EUROPEEN

(11) **EP 4 058 365 B1**
(45) Date de publication et mention de la délivrance du brevet: **08.05.2024**
(21) Numéro de dépôt: 20812397.6
(22) Date de dépôt: 02.11.2020
(51) Int. Cl.: B64F 5/40, B64F 5/60, G07C 5/00, B64D 45/00, F02C 9/00

(54) **DISPOSITIF ET PROCEDE DE GESTION D'UNE FLOTTE DE DISPOSITIFS DE COMMUNICATION D'INFORMATION POUR MISE A JOUR D'UN JUMEAU NUMERIQUE D'UNE TURBOMACHINE**
VORRICHTUNG UND VERFAHREN ZUR VERWALTUNG EINER FLOTTE VON INFORMATIONSKOMMUNIKATIONSGERÄTEN ZUR AKTUALISIERUNG EINES DIGITALEN ZWILLINGS EINER TURBOMASCHINE
DEVICE AND METHOD FOR MANAGING A FLEET OF INFORMATION COMMUNICATION DEVICES FOR UPDATING A DIGITAL TWIN OF A TURBOMACHINE

(30) Priorité: 14.11.2019 FR 1912734
(43) Date de publication de la demande: 21.09.2022
(73) Titulaire: SAFRAN AIRCRAFT ENGINES, 75015 Paris (FR)
(72) Inventeur: GARNIER, Alméric, Pierre, Louis, 77550 MOISSY-CRAMAYEL (FR); AURIOL, Jacques, 77550 MOISSY-CRAMAYEL (FR); COUPARD, Josselin, Xavier, 77550 MOISSY-CRAMAYEL (FR)
(74) Mandataire: Cabinet Beau de Loménie
(86) Numéro de dépôt international: PCT/FR2020/051972
(87) Numéro de publication internationale: WO 2021/094667

(56) Documents cités:
- EP-A2- 2 244 149
- US-A1- 2008 125 950
- US-A1- 2017 286 572
- US-A1- 2017 323 240

## Description

### Domaine Technique

La présente invention appartient au domaine de l'assistance à la maintenance aéronautique, en particulier pour la gestion d'une flotte de turbomachines. Elle concerne plus particulièrement un procédé et un dispositif de communication d'informations relatives au fonctionnement des turbomachines.

### Technique antérieure

Dans le cadre de la gestion d'une flotte de turbomachines, on utilise généralement des jumeaux numériques (« digital twins » en langue anglaise) de ces turbomachines pour illustrer, décrire, reproduire, et simuler de manière numérique chaque turbomachine de la flotte. Un jumeau numérique est donc une représentation information de la turbomachine permettant notamment de mettre en oeuvre des simulations. A titre indicatif, un jumeau numérique permet de simuler le comportement thermomécanique d'une turbomachine ou encore les usures constatées, et ce dans un environnement numérique.

Typiquement, un jumeau numérique comprend, sur un support de stockage informatique, des informations de configuration, des données d'intervention et de maintenance, des données opérationnelles, une maquette numérique tridimensionnelle de la turbomachine, de la documentation, ou encore des modèles numériques permettant de reproduire ou de simuler numériquement le fonctionnement de la turbomachine associée.

Une flotte de turbomachine peut être gérée sur la base d'un ensemble de jumeaux numériques, en particulier pour mettre en oeuvre si cela est nécessaire des opérations de maintenance. Par exemple, les jumeaux numériques peuvent servir à surveiller la santé des turbomachines pour mettre en oeuvre des opérations de maintenance prédictive.

Il existe des jumeaux numériques pour des équipements de la turbomachine, de ce fait, une turbomachine peut être associée à une pluralité de jumeaux numériques qui peuvent viser chacun soit une portion soit toute la turbomachine. Dans la présente demande, l'expression « jumeau numérique de la turbomachine » vise à la fois les jumeaux numériques pour des équipements d'une turbomachine ou ceux pour une turbomachine entière.

Il a été observé que les jumeaux numériques des turbomachines peuvent contenir des informations qui illustrent mal l'état réel d'une turbomachine. Cela résulte de la difficulté à obtenir des informations issues des turbomachines.

De l'état de la technique antérieure, on connaît les documents
US 2008/125950, EP 2 244 149, et US 2017/286572. US 2008/125950 et EP 2 244 149 décrivent des dispositifs de communication d'information à fixation réversible sur une turbomachine d'aéronef, comprenant des modules adaptés à obtenir des paramètres de fonctionnement de la turbomachine. US 2017/286572 décrit un système pour faire le monitoring et/ou estimer la durée de vie d'un jumeau physique de turbomachine (i.e. évaluer l'état de santé de la turbomachine) qui utilise pour se faire un jumeau numérique mis à jour à l'aide d'information numérique obtenue par des détecteurs sur la turbomachine.

L'invention vise notamment à pallier ces inconvénients.

### Exposé de l'invention

A cet effet, l'invention propose un procédé de gestion d'une flotte de dispositifs de communication d'information à fixation réversible sur des turbomachines d'aéronefs, comprenant :
une association d'au moins un dispositif de ladite flotte de dispositifs à une turbomachine d'une flotte de turbomachines,
une fixation du dispositif de ladite flotte de dispositifs à la turbomachine de ladite flotte de turbomachines,
une obtention d'au moins un paramètre de fonctionnement de la turbomachine,
une élaboration d'au moins un indicateur permettant la mise à jour d'un jumeau numérique de la turbomachine sur la base du paramètre de fonctionnement obtenu,
une communication dudit indicateur permettant la mise à jour du jumeau numérique à une entité de stockage du jumeau numérique.

Le procédé peut comprendre en outre la mise à jour du jumeau numérique, éventuellement par l'entité de stockage du jumeau numérique.

Par fixation réversible, on entend une fixation du dispositif sur la turbomachine qui peut être manuelle voire ne nécessiter aucun recours à un quelconque outil.

Le dispositif peut ainsi être monté et démonté de la turbomachine rapidement et facilement sans outil. Le système modulaire peut ainsi être monté successivement sur différentes turbomachines en fonction des besoins. Cette amovibilité permet d'extraire les données (le paramètre de fonctionnement) de la turbomachine très rapidement, tout simplement en retirant le dispositif modulaire, ce dernier pouvant être remplacé par un autre dispositif si besoin pour le vol suivant. Les données peuvent ensuite être récupérées en connectant le dispositif modulaire ainsi retiré à une station au sol dans l'étape de communication.

Cette amovibilité permet en outre de limiter l'impact en masse sur une turbomachine, et par extension sur un aéronef, lié à l'embarquement sur la turbomachine d'un tel dispositif.

On peut noter que le dispositif utilisé par le procédé est en fait de type modulaire, la modularité du dispositif embarqué en tant que kit Plug & Play lui permet d'être monté de manière ponctuelle sur au moins une turbomachine et ainsi d'éviter d'avoir deux systèmes embarqués sur un même aéronef et de n'embarquer le système que lorsque la récupération des données est nécessaire (c'est-à-dire l'obtention du paramètre de fonctionnement).

Typiquement, la fixation réversible permet à un opérateur d'enlever facilement, par exemple en 30 minutes, le dispositif et ainsi de clairement optimiser le temps d'opération sur la turbomachine.

Aussi, l'invention permet de récupérer des informations pour la mise à jour d'un jumeau numérique facilement, puisqu'il suffit de mettre en oeuvre l'association et la fixation pour autoriser la récupération d'informations nécessaires. De ce fait, il est aisé et rapide de mettre à jour un jumeau numérique et on évite l'obsolescence des jumeaux numériques.

Par exemple, le paramètre de fonctionnement peut être toute valeur qu'un capteur du dispositif peut mesurer.

On peut noter qu'à titre indicatif, les étapes du procédé décrit ci-avant sont mises en oeuvre par le dispositif. Si une mise à jour du jumeau numérique est réalisée, alors cette étape est plutôt effectuée par l'entité de stockage.

Selon 2. la revendication 1, le procédé comprend une étape préliminaire de détermination de l'état non-à jour d'au moins une portion du jumeau numérique de la turbomachine nécessitant ledit indicateur permettant la mise à jour du jumeau numérique de la turbomachine sur la base du paramètre de fonctionnement obtenu.

Dans cette étape, on pourra notamment déterminer dans l'ensemble des jumeaux numériques lesquels sont à jour et lesquels sont non-à jour, puis identifier les turbomachines associées aux jumeaux non-à jour.

Ce mode de mise en oeuvre selon la revendication 1 permet de ne mettre en oeuvre l'association et la fixation que pour des turbomachines ayant un jumeau numérique qui n'est pas à jour. De ce fait, on limite l'impact sur la masse lié à l'ajout des dispositifs sur les turbomachines.

Selon un mode de mise en oeuvre particulier, l'état non-à jour de ladite au moins une portion du jumeau numérique de la turbomachine est lié à la détection d'un évènement choisi dans le groupe comprenant : une durée depuis la dernière mise à jour de la portion dépassant un seuil de durée, un écart entre une information de ladite portion et une information provenant de la turbomachine dépassant un seuil relatif à cette information, une alerte.

Par exemple, le seuil de durée peut être une durée en jours ou en mois. Le seuil relatif à l'information peut être un seuil basé sur une différence entre deux valeurs. L'alerte peut être de tout type, par exemple une alerte en service, une alerte liée à des opérations de maintenance, etc.

Selon un mode de mise en oeuvre particulier, on détermine l'état non-à jour de ladite au moins une portion de jumeaux numérique d'une pluralité de turbomachines de la flotte de turbomachines, et ladite association comprend l'association d'un dispositif à chaque turbomachine d'un sous-groupe de ladite pluralité de turbomachines.

Ici, la pluralité de turbomachines partage un même besoin : elles ont toutes une même portion de jumeau numérique qui n'est pas à jour.

Le sous-groupe peut comprendre une ou plusieurs turbomachines. Il a été observé qu'il suffit d'associer un faible nombre de turbomachines (le sous-groupe) avec des dispositifs si un même besoin est partagé par plusieurs turbomachines. Ceci permet également de limiter l'impact sur la masse embarquée par toutes les turbomachines de la flotte.

L'homme du métier saura choisir les turbomachines qui doivent être associées parmi la pluralité de turbomachines.

Selon un mode particulier de mise en oeuvre, le procédé comprend une étape postérieure de retrait dudit dispositif de la flotte de dispositifs de ladite turbomachine de la flotte de turbomachines.

Comme expliqué ci-avant, ce retrait est facilité par le caractère réversible de la fixation.

Selon un mode particulier de mise en oeuvre, le procédé comprend en outre une élaboration d'un jumeau numérique à partir dudit indicateur.

Cette étape peut être mise en oeuvre au sein de l'entité de stockage du jumeau numérique.

Selon un mode particulier de mise en oeuvre, le procédé comprend en outre un traitement de comparaison de l'indicateur permettant la mise à jour du jumeau numérique avec le jumeau numérique.

Typiquement, on peut vérifier si un écart est observable entre l'indicateur permettant la mise à jour et les informations déjà enregistrées dans le jumeau numérique. Un traitement supplémentaire peut alors être mis en oeuvre si l'écart est considéré comme trop important (typiquement la génération d'une alerte).

Selon un mode particulier de mise en oeuvre, l'entité de stockage du jumeau numérique est embarquée par l'aéronef ou est distante.

En effet, l'entité de stockage du jumeau numérique peut être embarquée sur la turbomachine, sur l'aéronef (avec par exemple un jumeau numérique de l'aéronef). Elle peut également être distante, typiquement sur une station au sol. Dans ce cas, la communication peut se faire soit de manière sans-fil lorsque l'aéronef est au sol, soit de manière filaire lorsque le dispositif est retiré.

L'invention propose également un procédé de gestion d'une flotte de turbomachines au moyen de dispositifs gérés selon le procédé tel que décrit ci-avant.

L'invention propose également un dispositif de communication d'information à fixation réversible sur une turbomachine d'aéronef selon la revendication 9.

Ce dispositif peut être configuré pour la mise en oeuvre de tous les modes particuliers de mise en oeuvre du procédé tel que décrit ci-avant.

Selon un mode particulier de réalisation, le dispositif comprend en outre une unité d'alimentation (typiquement électrique) configurée pour être couplée à une source d'alimentation (typiquement électrique).

La source d'alimentation électrique peut être embarquée et être une batterie, couplée à l'unité d'alimentation et permettant le fonctionnement du dispositif indépendamment de la turbomachine sur laquelle il est destiné à être embarqué.

L'autonomie du dispositif modulaire fournie par la source d'alimentation permet d'installer ponctuellement le dispositif sur une turbomachine sans le relier par un câble à une source d'alimentation et ainsi de faciliter son installation en évitant d'avoir à passer un câble sur la turbomachine entre la source d'alimentation et le dispositif.

L'alimentation électrique est réalisée de préférence au travers d'une source d'alimentation sécurisée telle qu'une alimentation isolée par exemple ou un système d'énergie autonome.

L'invention propose également un système comprenant une flotte d'au moins un dispositif tel que décrit ci-avant et au moins une entité de stockage de jumeau numérique.

L'invention propose également une turbomachine d'aéronef équipée d'un dispositif tel que décrit ci-avant.

L'invention propose également un aéronef équipé de la turbomachine tel que décrite ci-avant.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] La figure 1 illustre schématiquement les étapes d'un procédé selon un exemple.
[Fig. 2] La figure 2 est une représentation schématique d'un dispositif sur une turbomachine.
[Fig. 3] La figure 3 illustre un ensemble avec des dispositifs, des turbomachines, et une entité de stockage.
[Fig. 4] La figure 4 est un aéronef avec une turbomachine équipée d'un dispositif.

### Description des modes de réalisation

On va maintenant décrire un procédé de gestion d'une flotte de dispositifs de communication d'information à fixation réversible sur des turbomachines d'aéronefs.

Ce procédé de gestion d'une flotte de dispositifs peut être mis en oeuvre dans le cadre d'un procédé de gestion d'une flotte de turbomachines, en particulier pour des turbomachines pour lesquelles on stocke des jumeaux numériques dans des entités de stockage (typiquement des stations au sol appartement à la société qui a fabriqué la turbomachine). A titre indicatif, la gestion d'une flotte de turbomachines comporte la gestion de la maintenance, la gestion de l'affectation à des aéronefs, etc.

Comme on le conçoit, il existe un besoin pour obtenir des jumeaux numériques de turbomachines le plus à jour possible. Le procédé présenté ci-après permet de répondre à ce besoin, en minimisant l'ajout de masse sur les turbomachines de la flotte de turbomachine.

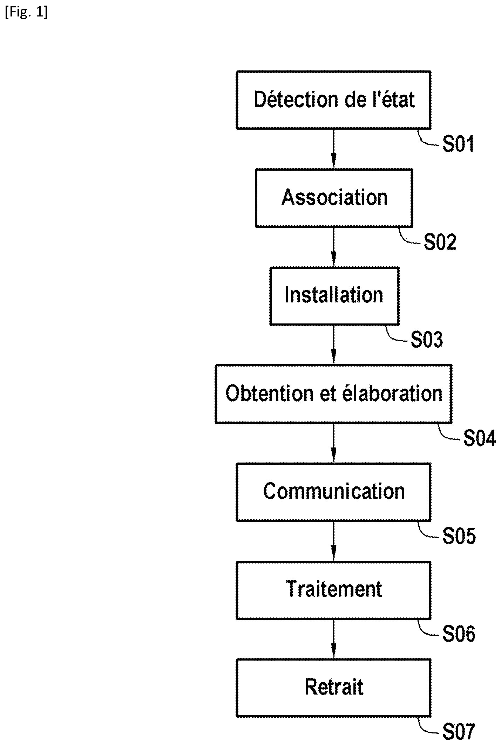

Sur la figure 1, on a représenté un exemple de procédé de gestion d'une flotte de dispositifs. Dans ce procédé, on utilise au moins un dispositif d'une flotte de dispositifs qui peuvent être identiques ou différents, une turbomachine d'une flotte de turbomachines, et une entité de stockage d'un jumeau numérique de cette turbomachine.

Dans une première étape S01, on détermine de l'état non-à jour d'au moins une portion du jumeau numérique de la turbomachine qui nécessite un indicateur permettant la mise à jour (complète ou partielle) du jumeau numérique de la turbomachine sur la base d'un paramètre de fonctionnement obtenu directement sur la turbomachine.

Par exemple, dans cette première étape S01, l'état non-à jour de ladite au moins une portion du jumeau numérique de la turbomachine est lié à la détection d'un évènement choisi dans le groupe comprenant : une durée depuis la dernière mise à jour de la portion dépassant un seuil de durée, un écart entre une information de ladite portion et une information provenant de la turbomachine dépassant un seuil relatif à cette information, une alerte.

On peut noter que non à-jour signifie également que ledit paramètre n'a pas été obtenu sur la turbomachine depuis une durée trop importante (supérieure à un seuil donné).

Dans cette étape, on peut vérifier l'état à jour ou non-à jour de plusieurs voire de toutes les turbomachines de la flotte de turbomachines. S'il est déterminé qu'une pluralité de turbomachines ont leur portion de jumeau numérique qui est non-à jour, alors cette pluralité de turbomachine est à analyser avec les dispositifs.

Cela étant, et comme cela apparaitra plus clairement ci-après, analyser toutes les turbomachines de la pluralité de turbomachines non-à jour n'est pas efficace en terme de masse car toutes devront être équipées de dispositifs.

Avantageusement, on choisit un sous-groupe de la pluralité au cours de l'étape S01.

Ainsi, dans l'étape S02, on peut associer à chaque turbomachine de ce sous-groupe un dispositif de la flotte de dispositif. Cette association peut être mise en oeuvre en tenant compte de critères de disponibilité des turbomachines ou des aéronefs sur lesquels sont montées les turbomachines, la disponibilité des dispositifs, ou encore d'autres critères. La disponibilité des aéronefs ou des turbomachines signifie qu'ils sont immobilisables là où l'on souhaite fixer un dispositif.

Cette étape S02 d'association peut être mise en oeuvre par le dispositif lui-même ou depuis un serveur distant.

Ensuite, dans l'étape S03, on installe par fixation un dispositif choisi lors de l'étape S02 avec une turbomachine choisie lors de l'étape S02. Cette fixation est de type réversible et pourra notamment être réalisée au moyens de clips de fixation (utilisables sans outils). Typiquement, on utilise des moyens de fixation physique multipoints.

En fait, le dispositif est du type LRU, selon un acronyme anglo-saxon bien connu de l'homme du métier signifiant en anglais « Line Replaceable Unit » et indiquant que le dispositif peut être fixé/retiré au cours d'une escale de l'aéronef.

Dans l'étape S04, on obtient au moins un paramètre de fonctionnement de la turbomachine. Par exemple, cette obtention peut être réalisée par un capteur du dispositif. Par exemple, ce capteur peut être un capteur de température, un capteur de pression, un accéléromètre, etc.

Egalement au cours de l'étape S04, on met en oeuvre une élaboration d'au moins un indicateur permettant la mise à jour d'un jumeau numérique de la turbomachine sur la base du paramètre de fonctionnement obtenu. Cette élaboration peut comprendre la préparation d'un paquet à émettre par des moyens de communication du dispositif, ou encore la mise en oeuvre d'un traitement pour que l'information obtenue puisse être directement utilisable pour mettre à jour un jumeau numérique.

Au cours de l'étape S05, on communique l'indicateur élaboré permettant la mise à jour du jumeau numérique à l'entité au sein de laquelle le jumeau numérique est stocké.

Dans une première variante, cette communication vise à transmettre à une entité de stockage distante l'indicateur. Par exemple, lorsque l'aéronef est au sol, une liaison sans-fil peut être utilisée pour atteindre un récepteur au sol. Ce récepteur peut être une station au sol dans laquelle le jumeau numérique est stocké ou alors il peut être en communication avec celui-ci au moyen d'un réseau de communication tel que l'Internet. La communication peut également être filaire, lorsque le dispositif est retiré, il peut communiquer ses informations en étant raccordé.

Dans une deuxième variante, l'entité de stockage est au sein de l'aéronef ou au sein de la turbomachine. Dans ce cas, la communication peut être filaire et être réalisée même pendant une phase de vol.

Après que l'indicateur ait été reçu par l'entité de stockage, on peut mettre en oeuvre un traitement dans l'étape S06, par exemple un traitement de comparaison de l'indicateur permettant la mise à jour du jumeau numérique avec le jumeau numérique.

Typiquement, on peut vérifier dans l'étape S06 si un écart est observable entre l'indicateur permettant la mise à jour et les informations déjà enregistrées dans le jumeau numérique. Un traitement supplémentaire peut alors être mis en oeuvre si l'écart est considéré comme trop important (typiquement la génération d'une alerte).

Aussi, on peut, avec les nouvelles informations, effectuer une mise à jour du jumeau numérique avec notamment :
- un recalage de données de santé,
- une mise en oeuvre d'un diagnostic sur la base des informations reçues,
- une alimentation d'une base de données,
- une mise à jour d'un modèle de santé de la turbomachine,
- une configuration supplémentaire du dispositif.

On pourra ensuite générer des alertes de type recommandation d'inspection ou d'ajout d'un autre dispositif (en particulier si cet autre dispositif est équipé d'autres capteurs).

Enfin, si suffisamment de paramètres de fonctionnement de la turbomachine ont été obtenus, on peut mettre en oeuvre un retrait du dispositif. Ce retrait est facilité par le caractère réversible/amovible de la fixation. En retirant le dispositif, on allège la turbomachine et on peut utiliser le dispositif sur une autre turbomachine.

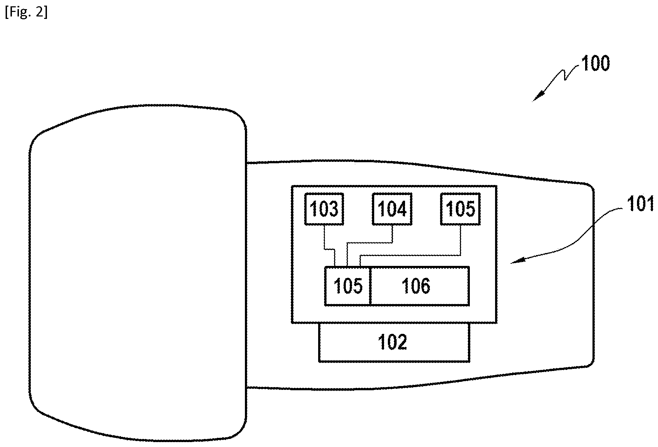

Sur la figure 2, on a représenté une turbomachine 100 équipée d'un dispositif 101 tel que celui utilisé pour mettre en oeuvre le procédé décrit en référence à la figure 1.

Ce dispositif comporte un module de fixation 102 du dispositif à la turbomachine. Par exemple, le module de fixation 102 peut comporter des clips de fixation avec des moyens de fixation physique multipoints.

Le dispositif comporte en outre un module d'obtention 103 d'un paramètre de fonctionnement de la turbomachine, typiquement un capteur de température, un capteur de pression, ou encore un accéléromètre.

Il comporte également un module d'élaboration 104 d'au moins un indicateur permettant la mise à jour d'un jumeau numérique de la turbomachine sur la base du paramètre de fonctionnement obtenu, et un module de communication 105 dudit indicateur. Le module de communication peut comporter une interface pour communication filaire (une prise), ou encore des moyens de communication sans-fil.

Pour assurer un fonctionnement autonome du dispositif, ce dernier comporte une unité d'alimentation couplée avec une batterie 106.

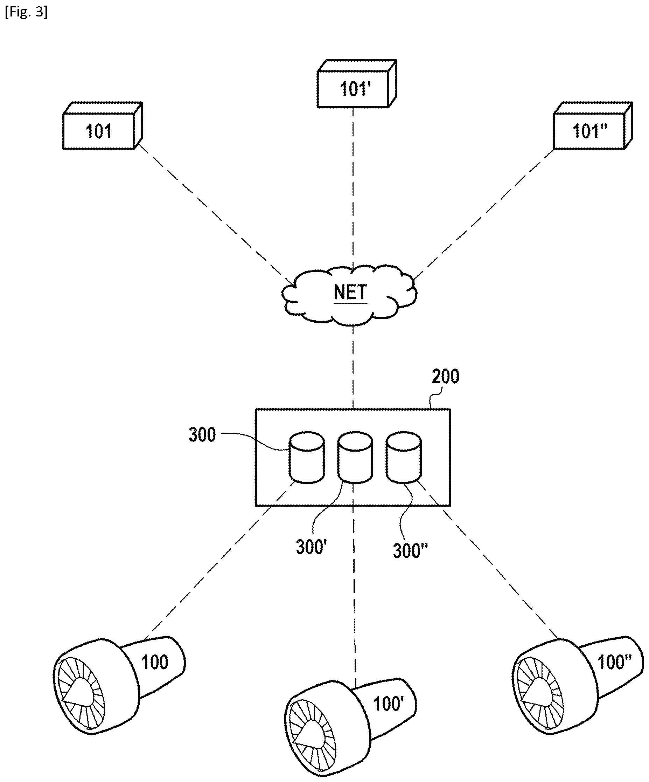

La figure 3 illustre une flotte de trois dispositifs 101, 101' et 101" analogues au dispositif 101 décrit en référence à la figure 2, et une flotte de turbomachines 100, 100' et 100" analogues à la turbomachine 100 décrite en référence à la figure 2.

Les dispositifs 100, 100', et 100" sont en communication directe ou indirecte avec une entité de stockage 200 qui est ici une station au sol. Ici, la communication entre les dispositifs et l'entité de stockage est mise en oeuvre au moyen d'un réseau NET tel que l'internet.

Dans l'entité de stockage, il y a trois jumeaux numériques stockés 300, 300', et 300" respectivement associés aux turbomachines 100, 100', et 100".

L'invention n'est néanmoins nullement limitée à l'utilisation d'une seule entité de stockage pour tous les jumeaux numériques. En fait, plusieurs entités de stockage peuvent être utilisées et les turbomachines peuvent être associées à différents jumeaux numériques. Les dispositifs peuvent par ailleurs être différents : leur module 105 peut comporter des capteurs différents. Ainsi, en fonction des besoins, on utilisera un dispositif plutôt qu'un autre.

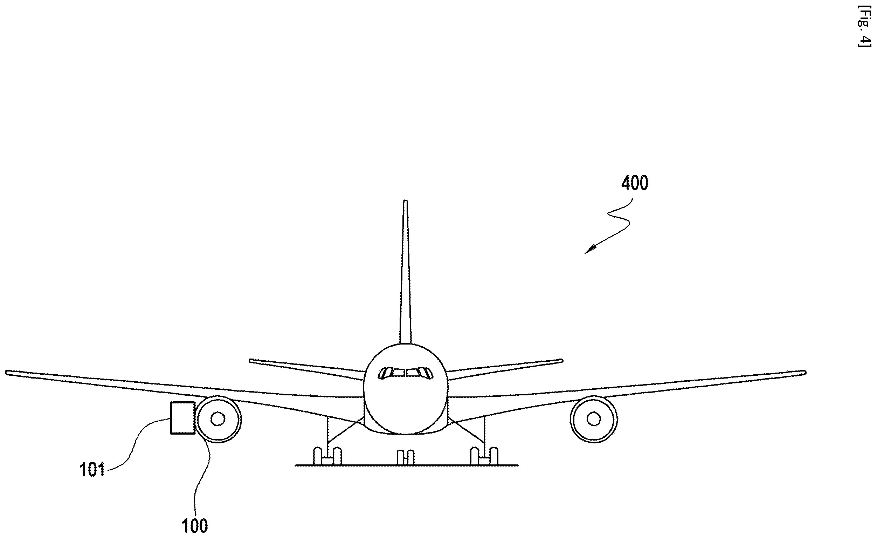

La figure 4 montre un aéronef 400 pour lequel une turbomachine 100 est munie d'un dispositif 101. Après une phase de vol, il est envisageable de retirer ce dispositif 100.

## Revendications

1. Procédé de gestion d'une flotte de dispositifs de communication d'information à fixation réversible sur des turbomachines d'aéronefs, comprenant :
une association (S02) d'au moins un dispositif de ladite flotte de dispositifs à une turbomachine d'une flotte de turbomachines,
une fixation (S03) du dispositif de ladite flotte de dispositifs à la turbomachine de ladite flotte de turbomachines,
une obtention (S04) d'au moins un paramètre de fonctionnement de la turbomachine,
une élaboration (S04) d'au moins un indicateur permettant la mise à jour d'un jumeau numérique (300) de la turbomachine sur la base du paramètre de fonctionnement obtenu,
une communication (S05) dudit indicateur permettant la mise à jour du jumeau numérique à une entité de stockage (200) du jumeau numérique,
le procédé comprenant une étape préliminaire de détermination (S01) de l'état non-à jour d'au moins une portion du jumeau numérique de la turbomachine nécessitant ledit indicateur permettant la mise à jour du jumeau numérique de la turbomachine sur la base du paramètre de fonctionnement obtenu.

2. Procédé selon la revendication 1, dans lequel l'état non-à jour de ladite au moins une portion du jumeau numérique de la turbomachine est lié à la détection d'un évènement choisi dans le groupe comprenant : une durée depuis la dernière mise à jour de la portion dépassant un seuil de durée, un écart entre une information de ladite portion et une information provenant de la turbomachine dépassant un seuil relatif à cette information, une alerte.

3. Procédé selon la revendication 1 ou 2, dans lequel on détermine l'état non-à jour de ladite au moins une portion de jumeaux numérique d'une pluralité de turbomachines de la flotte de turbomachines, et ladite association comprend l'association d'un dispositif à chaque turbomachine d'un sous-groupe de ladite pluralité de turbomachines.

4. Procédé selon l'une quelconque des revendications 1 à 3, comprenant une étape postérieure de retrait (S07) dudit dispositif de la flotte de dispositifs de ladite turbomachine de la flotte de turbomachines.

5. Procédé selon l'une quelconque des revendications 1 à 4, comprenant en outre une élaboration d'un jumeau numérique à partir dudit indicateur.

6. Procédé selon l'une quelconque des revendications 1 à 5, comprenant en outre un traitement de comparaison de l'indicateur permettant la mise à jour du jumeau numérique avec le jumeau numérique.

7. Procédé selon l'une quelconque des revendications 1 à 6, dans lequel l'entité de stockage du jumeau numérique est embarquée par l'aéronef ou est distante.

8. Procédé de gestion d'une flotte de turbomachines au moyen de dispositifs gérés selon le procédé selon l'une quelconque des revendications 1 à 7.

9. Dispositif de communication d'information à fixation réversible sur une turbomachine d'aéronef, comprenant :
un module (102) adapté à fixer le dispositif à la turbomachine de façon réversible,
un module d'obtention (103) d'au moins un paramètre de fonctionnement de la turbomachine,
un module (104) configuré pour élaborer au moins un indicateur permettant la mise à jour d'un jumeau numérique de la turbomachine sur la base du paramètre de fonctionnement obtenu,
un module (105) configuré pour communiquer ledit indicateur permettant la mise à jour du jumeau numérique à une entité de stockage du jumeau numérique,
le dispositif étant configuré pour mettre en oeuvre une étape préliminaire de détermination (S01) de l'état non-à jour d'au moins une portion du jumeau numérique de la turbomachine nécessitant ledit indicateur permettant la mise à jour du jumeau numérique de la turbomachine sur la base du paramètre de fonctionnement obtenu.

10. Dispositif selon la revendication 9, comprenant en outre une unité d'alimentation (105) configurée pour être couplée à une source d'alimentation (106).

11. Système comprenant une flotte d'au moins un dispositif (101) selon la revendication 9 ou 10 et au moins une entité de stockage (200) de jumeau numérique.

12. Turbomachine d'aéronef équipée d'un dispositif (101) selon la revendication 9 ou 10.

13. Aéronef équipé de la turbomachine selon la revendication 12.

## Patentansprüche

1. Verfahren zur Verwaltung einer Flotte von Informationskommunikationsgeräten mit reversibler Befestigung an Turbomaschinen von Luftfahrzeugen, umfassend:
Verbindung (S02) mindestens eines Geräts der Flotte von Geräten mit einer Turbomaschine einer Flotte von Turbomaschinen,
Befestigung (S03) des Geräts der Flotte von Geräten an der Turbomaschine der Flotte von Turbomaschinen,
Erhalt (S04) mindestens eines Betriebsparameters der Turbomaschine,
Ausarbeitung (S04) mindestens eines Indikators, der die Aktualisierung eines digitalen Zwillings (300) der Turbomaschine basierend auf dem erhaltenen Betriebsparameter ermöglicht,
Kommunikation (S05) des Indikators, der die Aktualisierung des digitalen Zwillings ermöglicht, an eine Entität (200) zur Speicherung des digitalen Zwillings, wobei das Verfahren einen vorhergehenden Schritt zur Bestimmung (S01) des nicht aktualisierten Zustands mindestens eines Teils des digitalen Zwillings der Turbomaschine umfasst, der den Indikator erfordert, der die Aktualisierung des digitalen Zwillings der Turbomaschine basierend auf dem erhaltenen Betriebsparameter ermöglicht.

2. Verfahren nach Anspruch 1, wobei der nicht aktualisierte Zustand des mindestens einen Teils des digitalen Zwillings der Turbomaschine mit der Erkennung eines Ereignisses verknüpft ist, das ausgewählt wird aus der Gruppe, die umfasst: eine Dauer seit der letzten Aktualisierung des Teils, die einen Dauerschwellenwert überschreitet, eine Abweichung zwischen einer Information des Teils und einer Information, die von der Turbomaschine stammt und einen Schwellenwert in Bezug auf diese Information überschreitet, einen Alarm.

3. Verfahren nach Anspruch 1 oder 2, wobei der nicht aktualisierte Zustand des mindestens einen digitalen Zwillingsteils mehrerer Turbomaschinen der Flotte von Turbomaschinen bestimmt wird und die Verbindung die Verbindung eines Geräts mit jeder Turbomaschine einer Untergruppe von den mehreren Turbomaschinen umfasst.

4. Verfahren nach einem der Ansprüche 1 bis 3, das einen nachfolgenden Schritt der Entfernung (S07) des Geräts der Flotte von Geräten von der Turbomaschine der Flotte von Turbomaschinen umfasst.

5. Verfahren nach einem der Ansprüche 1 bis 4, das ferner eine Ausarbeitung eines digitalen Zwillings ausgehend von dem Indikator umfasst.

6. Verfahren nach einem der Ansprüche 1 bis 5, das ferner eine Verarbeitung zum Vergleich des Indikators, der die Aktualisierung des digitalen Zwillings ermöglicht, mit dem digitalen Zwilling umfasst.

7. Verfahren nach einem der Ansprüche 1 bis 6, wobei die Entität zur Speicherung des digitalen Zwillings sich an Bord des Luftfahrzeugs befindet oder sich entfernt befindet.

8. Verfahren zur Verwaltung einer Flotte von Turbomaschinen mittels Geräten, die nach dem Verfahren nach einem der Ansprüche 1 bis 7 verwaltet werden.

9. Informationskommunikationsgerät mit reversibler Befestigung an einer Luftfahrzeug-Turbomaschine, umfassend:
ein Modul (102), das für das reversible Befestigen des Geräts an der Turbomaschine geeignet ist,
ein Modul (103) für den Erhalt mindestens eines Betriebsparameters der Turbomaschine,
ein Modul (104), das dazu ausgestaltet ist, mindestens einen Indikator auszuarbeiten, der die Aktualisierung eines digitalen Zwillings der Turbomaschine basierend auf dem erhaltenen Betriebsparameter ermöglicht,
ein Modul (105), das dazu ausgestaltet ist, den Indikator, der die Aktualisierung des digitalen Zwillings ermöglicht, an eine Entität zur Speicherung des digitalen Zwillings zu kommunizieren,
wobei das Gerät dazu ausgestaltet ist, einen vorhergehenden Schritt zur Bestimmung (S01) des nicht aktualisierten Zustands mindestens eines Teils des digitalen Zwillings der Turbomaschine durchzuführen, der den Indikator erfordert, der die Aktualisierung des digitalen Zwillings der Turbomaschine basierend auf dem erhaltenen Betriebsparameter ermöglicht.

10. Gerät nach Anspruch 9, das ferner eine Versorgungseinheit (105) umfasst, die dazu ausgestaltet ist, an eine Versorgungsquelle (106) gekoppelt zu sein.

11. System, das eine Flotte aus mindestens einem Gerät (101) nach Anspruch 9 oder 10 und mindestens eine Entität (200) zur Speicherung eines digitalen Zwillings umfasst.

12. Luftfahrzeug-Turbomaschine, die mit einem Gerät (101) nach Anspruch 9 oder 10 ausgerüstet ist.

13. Luftfahrzeug, das mit der Turbomaschine nach Anspruch 12 ausgerüstet ist.

## Claims

1. A method for managing a fleet of information communication devices with reversible attachment on aircraft turbomachines, comprising:
an association (S02) of at least one device among said fleet of devices with a turbomachine among a fleet of turbomachines,
an attachment (S03) of the device among said fleet of devices to the turbomachine among said fleet of turbomachines,
an acquisition (S04) of at least one turbomachine operating parameter,
a development (S04) of at least one indicator that allows the update of a digital twin (300) of the turbomachine based on the acquired operating parameter,
a communication (S05) of said indicator that allows the update of the digital twin to a digital twin storage entity (200);
the method further comprising a preliminary step of determining (S01) the out-of-date state of at least one portion of the digital twin of the turbomachine requiring said indicator that allows the update of the digital twin of the turbomachine based on the acquired operating parameter.

2. The method according to claim 1, wherein the out-of-date state of said at least one portion of the digital twin of the turbomachine is related to the detection of an event chosen from the group comprising: a duration since the last update of the portion exceeding a duration threshold, a discrepancy between information of said portion and information coming from the turbomachine exceeding a threshold relating to this information, an alert.

3. The method according to claim 1 or 2, wherein the out-of-date state of said at least one portion of digital twins of a plurality of turbomachines among the fleet of turbomachines is determined, and said association comprises the association of a device with each turbomachine of a subgroup of said plurality of turbomachines.

4. The method according to any one of claims 1 to 3, comprising a subsequent step of withdrawing (S07) said device among the fleet of devices of said turbomachine among the fleet of turbomachines.

5. The method according to any one of claims 1 to 4, further comprising a development of a digital twin from said indicator.

6. The method according to any one of claims 1 to 5, further comprising a comparison processing of the indicator that allows the update of the digital twin with the digital twin.

7. The method according to any one of claims 1 to 6, wherein the digital twin storage entity is embedded by the aircraft or is remote.

8. A method for managing a fleet of turbomachines by means of devices managed according to the method according to any one of claims 1 to 7.

9. An information communication device with reversible attachment on an aircraft turbomachine, comprising:
a module (102) for attaching the device to the turbomachine,
a module (103) for acquiring at least one turbomachine operating parameter,
a module (104) for developing at least one indicator that allows the update of a digital twin of the turbomachine based on the acquired operating parameter,
a module (105) for communicating said indicator that allows the update of the digital twin to a digital twin storage entity,
said device being configured for executing a preliminary step of determining (S01) the out-of-date state of at least one portion of the digital twin of the turbomachine requiring said indicator that allows the update of the digital twin of the turbomachine based on the acquired operating parameter.

10. The device according to claim 9, further comprising a supply unit (105) configured to be coupled to a supply source (106).

11. A system comprising a fleet of at least one device (101) according to claim 9 or 10 and at least one digital twin storage entity (200).

12. An aircraft turbomachine equipped with a device (101) according to claim 9 or 10.

13. An aircraft equipped with the turbomachine according to claim 12.
